# EUROPÄISCHE PATENTSCHRIFT

(11) **EP 1 080 353 B1**
(45) Veröffentlichungstag und Bekanntmachung des Hinweises auf die Patenterteilung: **05.12.2001**
(21) Anmeldenummer: 99924926.1
(22) Anmeldetag: 10.05.1999
(51) Int. Cl.: G01M 13/02

(54) **VERSPANNUNGSPRÜFSTAND FÜR HUBSCHRAUBERGETRIEBE**
STRESS TEST RIG FOR HELICOPTER TRANSMISSIONS
BANC D'ESSAI DE CONTRAINTE POUR TRANSMISSION D'HELICOPTERE

(30) Priorität: 16.05.1998 DE 19822093
(43) Veröffentlichungstag der Anmeldung: 07.03.2001
(73) Patentinhaber: ZF Luftfahrttechnik GmbH, 34379 Calden (DE)
(72) Erfinder: KRUG, Herbert, D-34369 Hofgeismar (DE); BRÜGGEMANN, Detlef, D-34292 Ahnatal (DE); FISCHER, Willy, Gerd, D-34292 Ahnatal (DE)
(74) Vertreter: Zietlow, Karl-Peter
(86) Internationale Anmeldenummer: EP9903199
(87) Internationale Veröffentlichungsnummer: WO9960362

(56) Entgegenhaltungen:
- DE-A- 19 616 729

## Beschreibung

Die Erfindung betrifft einen Verspannungsprüfstand für Hubschraubergetriebe mit den Merkmalen nach dem Oberbegriff von Anspruch 1.

In der DE 196 16 729 A1 ist ein gattungsgemäßer Verspannungsprüfstand offenbart. Ein von einem Motor angetriebenes erstes Prüfstandsgetriebe ist über Wellen und Verbindungskupplungen trieblich mit einem zu prüfenden Hubschraubergetriebe, welches eine abtriebsseitige Rotorwelle aufweist, verbunden. Ein zweites, oberhalb der Rotorwelle des Prüfgetriebes angeordnetes Prüfstandsgetriebe ist trieblich mit der Rotorwelle verbunden. Eine Wellen-Verbindung zum ersten Prüfstandsgetriebe schließt den Verspannkreis. Es ist ein Verspannmechanismus zur Vorgabe des Verspannmoments im Verspannkreis vorgesehen. Durch die Rückführung der Leistung vom Prüfgetriebe-Ausgang auf den Prüfgetriebe-Eingang werden hohe Prüfleistungen ohne einen entsprechend hohen Energieaufwand ermöglicht, da vom Motor lediglich Verlustleistungen im Verspannungsprüfstand aufgebracht werden müssen.

Hubschraubergetriebe verzweigen Antriebsleistungen von ein bis drei Antriebsmaschinen bei Drehzahlreduzierungen auf verschiedene Abtriebe, wie Hauptrotor, Heckrotor und Hilfsabtriebe. Diese spezifisch hoch beanspruchten Getriebe sind entsprechend den Forderungen in der Luftfahrt klein und leicht ausgeführt. Die Getriebegehäuse sind vorwiegend aus Aluminium- und Magnesiumlegierungen hergestellt. Die Elastizitätsmoduln dieser Werkstoffe liegen bei der Hälfte bis zu einem Drittel des Elastizitätsmoduls von Stahllegierungen, d. h., die elastischen Verformungen liegen unter Last entsprechend höher. Insbesondere tritt eine Verdrehung des Getriebegehäuses um die Rotorwellenachse auf.

Dies hat zur Folge, daß Ein- oder Abtriebe, die in radialem Abstand von der Rotorwellenachse am Getriebe angeordnet sind, sich aus ihrer ursprünglichen Position verlagern. Gegenüber den Achsen von anschließbaren Wellen, die zu den Antriebsmaschinen oder zum Heckrotorabtrieb führen, treten an den Achsen der Ein- bzw. Abtriebe des Getriebes Abwinkelungen und radiale Verlagerungen auf.

Im Hubschrauber wird ein Teil der Verlagerungen durch verdrehsteife, winkelbewegliche Lamallen- oder Membrankupplungen ausgeglichen. Ein erheblicher Teil der Verlagerungen wird jedoch durch die in der Regel sehr langen Verbindungswellen zu den Antriebsmaschinen bzw. zum Heckrotorabtrieb ausgeglichen.

Beim Einbau der Getriebe in einen solchen Verspannungsprüfstand wird weitgehend die Einbausituation des Getriebes in der Hubschrauberzelle simuliert. Aus technisch wirtschaftlichen und aus Platzgründen kommen beim Prüfstandsaufbau jedoch wesentlich kürzere Antriebs- bzw. Abtriebswellen zum Einsatz.

Wegen der kürzeren Wellen muß ein größerer Teil der Verlagerungen durch die Kupplungselemente ausgeglichen werden. Neben einer wesentlich höheren. Belastung der Kupplungselemente durch die größeren Winkel treten auch an den Ein- bzw. Abtrieben des Hubschraubergetriebes wesentlich höhere Lagerbelastungen in radialer Richtung auf. Die hohen Belastungen bei gleichzeitig sehr hohen Drehzahlen bis etwa 25 000 l/min können zu Brüchen der Kupplungselemente und zu Beschädigungen im Lagerbereich der Ein- bzw. Abtriebsstellen und an den hochsensiblen Freiläufen der Hubschraubergetriebe führen. Die Beanspruchungen im Prüfstand dürfen aber nicht über die Betriebslasten im Hubschrauber hinausgehen oder, im schlimmsten Fall, schon Vorschädigungen des Getriebes hervorrufen.

Aus der US 5,307,676 ist eine Verzahnungsprüfmaschine bekanntgeworden, mit Vorrichtungen zur Lageveränderungen von einzelnen, miteinander verzahnten Zahnrädern.

Die der Erfindung zugrunde liegende Aufgabe ist es, einen gattungsgemäßen Verspannungsprüfstand so weiterzuentwickeln, daß auf kleinem Bauraum eine möglichst exakte Simulation der im Hubschrauber auftretenden Belastungen ermöglicht ist. Der Verspannungsprüfstand soll flexibel an verschiedene Hubschrauber-Getriebetypen und Belastungsprofile anpaßbar sein und eine hohe Sicherheit gegenüber unzulässigen Belastungen oder Beschädigungen aufweisen.

Die Aufgabe wird dadurch gelöst, daß zur Befestigung des Prüfgetriebes eine durch mindestens einen Aktuator um die Rotorwellenachse des Prüfgetriebes verdrehbare Aufspannplatte vorgesehen ist. Diese Anordnung ermöglicht, die unter Last auftretenden Verlagerungen an den Verbindungskupplungen des Prüfgetriebes ganz oder teilweise auszugleichen.

In einer vorteilhaften Ausgestaltung der Erfindung sind die verdrehbare Aufspannplatte und die Aktuatoren auf einem Montagewagen angeordnet, der das Prüfgetriebe und alle erforderlichen Adaptionseinrichtungen, wie Adaptionsgetriebe oder dergleichen, aufnimmt. Die Verwendung eines an sich bekannten Montagewagens bietet im Zusammenhang mit der vorliegenden Erfindung den Vorteil, daß mit einfachen Mitteln eine individuelle Adaption von verschiedenen Hubschrauber-Getriebetypen erfolgen kann. Die Anschlußstellen für Getriebefüße oder Fußflansche der Prüfgetriebe sind auf der Aufspannplatte so angeordnet, daß die Drehachse der Aufspannplatte mindestens annähernd mit der Rotorwellenachse zusammenfällt. Die Anordnung der Aufspannplatte, der Aktuatoren und gegebenenfalls. erforderlichen Adaptionsgetriebe auf dem Montagewagen ermöglicht eine standardisierte Verbindungsstelle vom Montagewagen zum Prüfstand.

Eine vorteilhafte Anordnung der Aktuatoren ergibt sich, wenn zwei sich symmetrisch gegenüberliegende Aktuatoren vorgesehen sind, welche jeweils zwischen einer Anschlußstelle der Aufspannplatte und einer Anschlußstelle des Montagewagens tangential zur Drehrichtung der Aufspannplatte angeordnet sind. Durch diese. Anordnung bleibt die Lagerung der verdrehbaren Aufspannplatte auf dem Montagewagen zumindest annähernd frei von Radialkräften.

Durch eine in Richtung der Verdrehachse axial verschiebliche Lagerung der. Aufspannplatte können Verspannungen vermieden werden.

In einer vorteilhaften Ausgestaltung der Erfindung weist der Verspannmechanismus in an sich bekannter Weise einen Verspannmotor mit einer mikroprozessor-gesteuerten, elektrischen Verspannmoment-Regeleinheit sowie ein Überlagerungsgetriebe auf. Hierdurch wird die verspannmomentabhängige Ansteuerung der Aktuatoren erleichtert, insbesondere, wenn eine elektronische Aktuator-Steuer-/Regeleinheit mit einem Signaleingang für einen Verspannmoment-Sollwert und mindestens einem Signalausgang für einen Positions-Sollwert eines Aktuators bzw. der Aufspannplatte vorgesehen ist.

Eine hohe Sicherheit kann erzielt werden, wenn im Verspannkreis mindestens ein Drehmoment-Sensor angeordnet ist und die elektronische Aktuator-Steuer-/Regeleinheit mindestens einen Signaleingang für einen Verspannmoment-Istwert des Drehmomentsensors aufweist oder wenn mindestens ein Sensor für den Positions-Istwert eines Aktuators bzw. der Aufspannplatte vorgesehen ist.

Anhand der beiliegenden Figuren soll die Erfindung näher erläutert werden.
Es zeigen:
- Fig. 1: eine schematische Draufsicht auf einen Teil eines bekannten Verspannungsprüfstands;
- Fig. 2: eine schematische Draufsicht auf einen Teil eines erfindungsgemäßen Verspannungsprüfstands;
- Fig. 3: eine schematische. Seitenansicht eines. Teiles eines erfindungsgemäßen Verspannungsprüfstands und
- Fig. 4: eine schematische Darstellung der Steuerung des Verspannungsprüfstands.

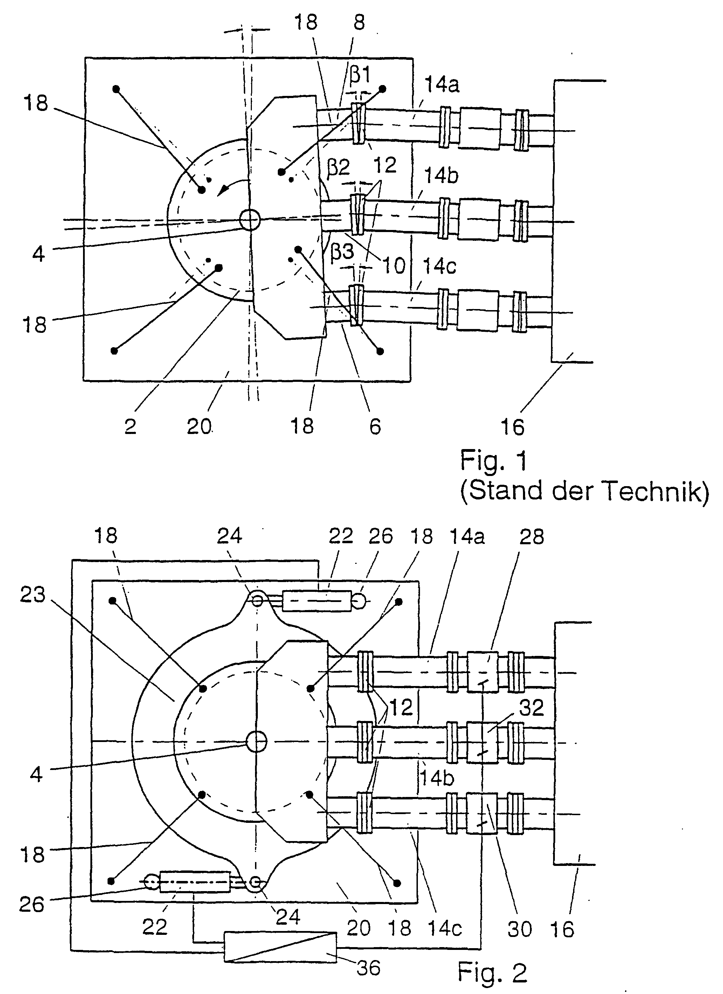

Das in Fig. 1 gezeigte bekannte Prüfgetriebe 2 weist eine senkrecht zur Zeichnungsebene verlaufende Rotorwelle 4 auf. Die Rotorwelle ist trieblich mit einem in Fig. 1 nicht dargestellten oberen Prüfstandsgetriebe 52 verbunden. Seitlich am Prüfgetriebe 2 sind zwei Eintriebe 6, 8 sowie ein Abtrieb 10, der zum Heckrotor führt, angeordnet. Diese sind mittels Verbindungskupplungen 12 und Wellen 14A, 14B, 14C trieblich mit entsprechenden Ab- bzw. Eintrieben des unteren Prüfstandsgetriebes 16 verbunden. Das Prüfgetriebe 2 ist mittels vier Streben 18 auf einem im Prüfstand befestigbaren Montagewagen 20 fixiert. Ein unter Last auftretendes Reaktionsmoment des Prüfgetriebes 2 wird im wesentlichen mittels nicht dargestellter Getriebefüße, Fußflansche oder horizontaler Streben auf den Montagewagen 20 übertragen. Unter Last wirkt zwischen diesen Verbindungsstellen und der Rotorwelle das Reaktionsmoment, welches zu einer Gehäuseverformung des Prüfgetriebes 2 führt.

Infolge dieser Gehäuseverformung werden die seitlich angeordneten Ein- bzw. Abtriebe 6, 8, 10 gegenüber den Verbindungswellen 14A, 14B, 14C zum Prüfstandsgetriebe 16 um die Winkel β1, β2, β3 abgewinkelt. Die vorzugsweise als Lamellen oder Membrankupplungen ausgebildeten Verbindungskupplungen 12 können diese Verlagerungen in gewissem Maße ausgleichen. Aufgrund der gegenüber dem Einbau im. Hubschrauber kürzeren Verbindungswellen 14a, 14b, 14c und der hohen Drehzahlen bis 25 000 1/min sind die Belastungen der Verbindungskupplungen 12 dabei jedoch erheblich, was zu Beschädigungen der Verbindungskupplungen führen kann. Auch sind die radialen Kräfte an den Ein- bzw. Abtrieben 6, 8, 10 wesentlich größ.er als im Hubschraubereinbau.

Fig. 2 zeigt schematisch einen. Teil eines erfindungsgemäßen Verspannungsprüfstands in der Draufsicht. Die unter Last auftretenden Verlagerungen an den Verbindungskupplungen 12 werden durch eine um die Achse der Rotorwelle 4 verdrehbare Aufspannplatte 23 ausgeglichen. Die Verdrehung der Aufspannplatte gegenüber dem Montagewagen 20 erfolgt durch zwei hydraulisch oder elektrisch betriebene Aktuatoren 22, die sich symmetrisch gegenüberliegend zwischen je einer Anschlußstelle 24 der Aufspannplatte und einer Anschlußstelle 26 des Montagewagens tangential zur Drehrichtung der Aufspannplatte angeordnet sind.

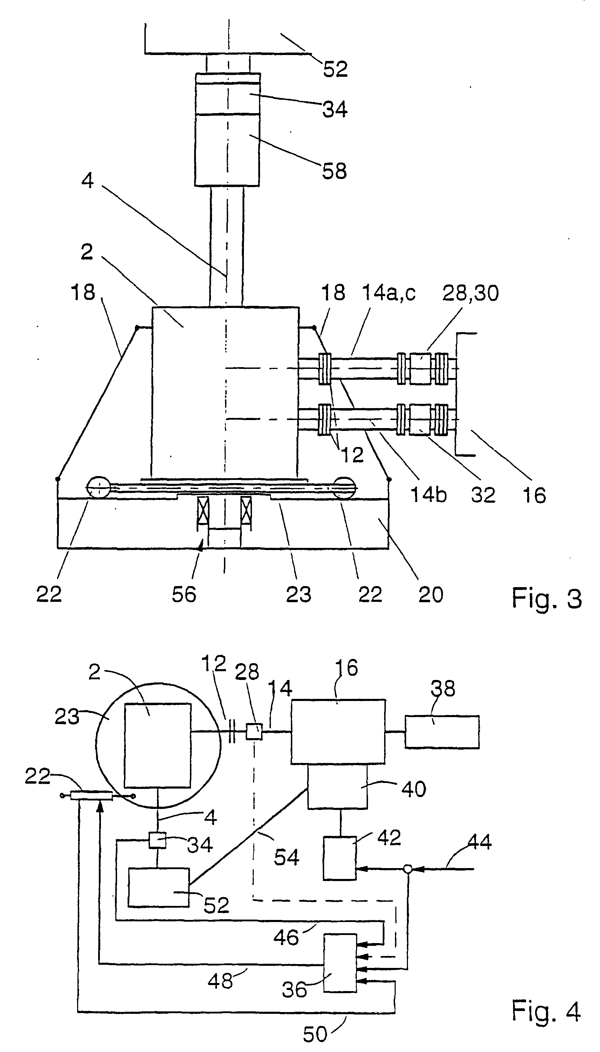

In den Wellenverbindungen 14A, 14B, 14C zwischen Prüfstandsgetrieben 16, 52 und Ein- bzw. Abtrieben des. Prüfgetriebes 2 sind Drehmomentsensoren 28, 30, 32, 34 zur Ermittlung des Istwertes des Verspannmomentes angeordnet. (Fig. 4) Dieser kann aus der Summe der Signalwerte der Drehmomentsensoren 28, 30 und 32. oder von dem Signalwert des an der Rotorwelle angeordneten Drehmomentsensors 34 ermittelt werden. Die in Fig. 2 gezeigte Aktuator-Steuer/Regeleinheit 36 weist einen Signaleingang für den Drehmoment-Istwert des Verspannmoments und Signalausgänge für die Positions-Sollwerte der Aktuatoren 22 auf. Abhängig von dem Signaleingang werden die Signalausgänge, beispielsweise durch einen linearen Zusammenhang mit dem Signaleingang, so bemessen, daß die Verlagerungen an den Verbindungskupplungen 12 ausgeglichen werden. Weitere Verfahren werden anhand Fig. 4 beschrieben.

Fig. 3 zeigt eine schematische Darstellung eines Teils eines erfindungsgemäßen Verspannungsprüfstands in Seitenansicht. Einander entsprechende. Teile sind mit denselben Bezugsziffern versehen. Das Prüfgetriebe überträgt das aus der Übersetzung herrührende Reaktionsmoment über nicht dargestellte Fußflansche auf die um die Achse der Rotorwelle verdrehbare Aufspannplatte 23. Die zusätzlich zwischen Prüfgetriebe und Montagewagen angeordneten Streben 18 übertragen im Hubschrauber im wesentlichen die zwischen Rotor und Hubschrauberzelle auftretenden Vertikalkräfte sowie Nick- und Rollmomente. Die Aufspannplatte 23 ist, mit dem Lager 56 im Montagewagen 20 bezüglich der Verdrehachse bzw. der Rotorwellenachse axial verschieblich gelagert. Hierdurch werden Verspannungen vermieden. Die Rotorwelle 4 ist über eine Kupplung 58 mit dem oberen Prüfstandsgetriebe 52 verbunden. Zwischen Rotorwelle 4 und oberem Prüfstandsgetriebe ist ein Drehmomentsensor 34 angeordnet. Das obere Prüfstandsgetriebe 52 ist durch in Fig. 3 nicht dargestellte Wellenverbindungen mit dem unteren Prüfstandsgetriebe gekoppelt, wodurch der Verspannkreis geschlossen wird.

Fig. 4 zeigt schematisch den Prüfstandsaufbau sowie die Steuerungseinrichtungen. Der Motor 38 treibt das untere Prüfstandsgetriebe 16 an und gleicht die im Verspannkr.eis auftretenden Verlustleistungen aus. Der Verspannkreis zwischen unterem Prüfstandsgetriebe 16, Prüfgetriebe 2. und oberem Prüfstandsgetriebe 52 wird durch die Welle 54 und das Überlagerungsgetriebe 40 geschlossen. Das Überlagerungsgetriebe 40 weist einen Eingang von einem Verspannmotor mit einer mikroprozessor-gesteuerten elektrischen Verspannmoment-Regeleinheit 42 auf. Dieser Verspannmechanismus 40, 42 erzeugt abhängig vom Verspannmoment-Sollwert 44 das Verspannmoment im Verspannkreis. Aufbau und Funktionsweise des Verspannmechanismus ist nicht Gegenstand dieser Erfindung.

Die elektronische Aktuator-Steuer-/Regeleinheit 36 empfängt das Signal des Verspannmoment-Sollwerts 44 und gibt einen Positions-Sollwert 48 für den Aktuator 22 aus. Im einfachsten Fall besteht ein linearer Zusammenhang zwischen den beiden Signalen. Da es sich bei dem Verspannmoment-Sollwert 44 um eine Steuergröße handelt, wird ein durch Rückkopplung verursachtes Zeitverhalten vermieden. Grundsätzlich ist es aber auch möglich, einen Verspannmoment-Istwert 46 eines Drehmomentsensors 34 zur Erzeugung des Positions-Sollwerts 48 zu verwenden. Weist die Aktuator-Steuer-/Regeleinheit 36 sowohl einen Signaleingang für den Verspannmoment-Sollwert 44 als auch einen Signaleingang für den Verspannmoment-Istwert 46 auf, so kann durch den Vergleich dieser Signale eine Fehlfunktion des Prüfstands diagnostiziert werden, um zur Vermeidung von Beschädigungen den Prüfstand ggf. abzuschalten. Wird von der Aktuator-Steuer-/Regeleinheit 36 außerdem ein Signal 50 eines Sensors für den Positions-Istwert ausgewertet, kann auch eine Fehlfunktion der Aktuatoren festgestellt werden. Weicht der Positions-Istwert um einen bestimmten Betrag vom Positions-Sollwert ab, kann ebenfalls von einer Fehlfunktion ausgegangen bzw. entsprechend reagiert werden. Wenn der Verspannmoment-Istwert 46 aufgrund einer Betriebsstörung plötzlich abfällt, werden die Aktuatoren 22 sofort in einem beschleunigten Notbetrieb in eine neutrale Ausgangsstellung gefahren.

### Bezugszeichen

- 2: Prüfgetriebe
- 4: Rotorwelle
- 6: Eintrieb
- 8: Eintrieb
- 10: Abtrieb
- 12: Verbindungskupplung
- 14a,b,c: Wellen
- 16: unteres Prüfstandsgetriebe
- 18: Strebe
- 20: Montagewagen
- 22: Aktuator
- 23: Aufspannplatte
- 24: Anschlußstelle
- 26: Anschlußstelle
- 28: Drehmomentsensor
- 30: Drehmomentsensor
- 32: Drehmomentsensor
- 34: Drehmomentsensor
- 36: Aktuator-Steuer-/Regeleinheit
- 38: Motor
- 40: Überlagerungsgetriebe
- 42: Verspannmotor mit mikroprozessor-gesteuerter Regeleinheit
- 44: Verspannmoment-Sollwert
- 46: Verspannmoment-Istwert
- 48: Positions-Sollwert
- 50: Positions-Istwert
- 52: oberes Prüfstandsgetriebe
- 54: Welle
- 56: Lager
- 58: Kupplung
- β1,2,3: Winkel

## Patentansprüche

1. Verspannungsprüfstand für Hubschraubergetriebe mit einem ersten Prüfstandsgetriebe (16), das von einem Motor (38) angetrieben wird und über Wellen (4, 14, 54), Verbindungskupplungen (12, 58), einem Verspannmechanismus (40, 42), einem zweiten Prüfstandsgetriebe (52) und einem Prüfgetriebe (2), welches eine abtriebsseitige Rotorwelle (4) aufweist, einen Verspannkreis bildet, **dadurch gekennzeichnet, daß** zur Aufnahme des Prüfgetriebes (2) eine durch mindestens einen Aktuator (22) um die Rotorwellenachse des Prüfgetriebes (2) verdrehbare Aufspannplatte (23) vorgesehen ist, um unter Last auftretende Verlagerungen an den Verbindungskupplungen (12) des Prüfgetriebes auszugleichen.

2. Verspannungsprüfstand nach Anspruch 1, **dadurch gekennzeichnet, daß** die verdrehbare Aufspannplatte (23) und die Aktuatoren (22) auf einem Montagewagen (20) angeordnet sind, der das Prüfgetriebe (2) und alle erforderlichen Adaptionseinrichtungen aufnimmt.

3. Verspannungsprüfstand nach Anspruch 2, **dadurch gekennzeichnet, daß** zwei sich symmetrisch gegenüberliegende Aktuatoren (22) vorgesehen sind, welche jeweils zwischen einer Anschlußstelle (24) der Aufspannplatte (23) und einer Anschlußstelle (26) des Montagewagens (20) tangential zur Drehrichtung der Aufspannplatte (23) angeordnet sind.

4. Verspannungsprüfstand nach einem der Ansprüche 1 bis 3, **dadurch gekennzeichnet, daß** die Aufspannplatte (23) durch ein Lager (56) bezüglich ihrer Verdrehachse axial verschieblich gelagert ist.

5. Verspannungsprüfstand nach einem der Ansprüche 1 bis 4, **dadurch gekennzeichnet, daß** der Verspannmechanismus einen Verspannmotor mit einer mikroprozessorgesteuerten elektrischen Verspannmoment-Regeleinheit (42) sowie ein Überlagerungsgetriebe (40) aufweist.

6. Verspannungsprüfstand nach einem der Ansprüche 1 bis 5, **dadurch gekennzeichnet, daß** eine elektronische Aktuator-Steuer-/Regeleinheit (36) mit einem Signaleingang für einen Verspannmoment-Sollwert (44) und mindestens einem Signalausgang für einen Positions-Sollwert (48) eines Aktuators (22) bzw. der Aufspannplatte (23) vorgesehen ist, zur verspannmomentabhängigen Ansteuerung der Aktuatoren (22).

7. Verspannungsprüfstand nach Anspruch 6, **dadurch gekennzeichnet, daß** im Verspannkreis mindestens ein Drehmoment-Sensor (34) angeordnet ist und die elektronische Aktuator-Steuer-/Regeleinheit (36) mindestens einen Signaleingang für einen Verspannmoment-Istwert (46) des Drehmoment-Sensors (34) aufweist.

8. Verspannungsprüfstand nach einem der Ansprüche 1 bis 7, **dadurch gekennzeichnet, daß** mindestens ein Sensor für den Positions-Istwert (50) eines Aktuators (22) bzw. der Aufspannplatte (23) vorgesehen ist.

9. Verfahren zum Betrieb eines Verspannungsprüfstands nach einem der Ansprüche 1 bis 8, **dadurch gekennzeichnet, daß** die Aktuatoren (22) abhängig vom Verspannmoment im Verspannkreis angesteuert werden, so daß Verlagerungen an den Verbindungskupplungen (12) des Prüfgetriebes, welche infolge des Verspannmoments eintreten, ausgeglichen werden.

10. Verfahren nach Anspruch 9, **dadurch gekennzeichnet, daß** die Aktuatoren (22) abhängig vom Verspannmoment-Sollwert (44) angesteuert werden.

11. Verfahren nach Anspruch 10 für einen Verspannungsprüfstand nach Anspruch 7 oder 8, **dadurch gekennzeichnet, daß** die Werte von Verspannmoment-Ist- (46) und -Sollwert (44) in der elektronischen Aktuator-Steuer-/Regeleinheit (36) verglichen werden, um eine Fehlfunktion zu erkennen.

12. Verfahren nach einem der Ansprüche 9 bis 11 für einen Verspannungsprüfstand nach Anspruch 8, **dadurch gekennzeichnet, daß** die Werte von Positions-Ist- (50) und -Sollwert (48) in der elektronischen Aktuator-Steuer-/Regeleinheit (36) verglichen werden, um eine Fehlfunktion zu erkennen.

13. Verfahren nach Anspruch 11, **dadurch gekennzeichnet, daß** bei einem plötzlichen Abfall des Verspannmoment-Istwerts aufgrund einer Fehlfunktion die Aktuatoren sofort in einem beschleunigten Notbetrieb in eine neutrale Ausgangsstellung gefahren werden.

## Claims

1. Stress test rig for helicopter transmissions having a first test rig transmission (16), which is powered by a motor (38) and forms a stress circuit via shafts (4, 14, 54), connecting couplings (12, 58), a stress mechanism (40, 42), a second test rig transmission (52) and a test transmission (2), which has a rotor shaft (4) on the output side, **characterised in that** a clamping plate (23), which can be rotated about the rotor shaft axis of the test transmission (2) by at least one actuator (22), is provided for accommodating the test transmission (2), in order to compensate for displacements at the connecting couplings (12) of the test transmission which occur under load.

2. Stress test rig according to Claim 1, **characterised in that** the rotatable clamping plate (23) and the actuators (22) are arranged on a mounting carriage (20), which accommodates the test transmission (2) and all necessary adaptor devices.

3. Stress test rig according to Claim 2, **characterised in that** two symmetrically opposite actuators (22) are provided, which are respectively arranged, tangentially with respect to the rotation direction of the clamping plate (23), between a connection point (24) of the clamping plate (23) and a connection point (26) of the mounting carriage (20).

4. Stress test rig according to one of Claims 1 to 3, **characterised in that** the clamping plate (23) is supported, axially displaceably with respect to its rotation axis, by a bearing (56).

5. Stress test rig according to one of Claims 1 to 4, **characterised in that** the stress mechanism has a stress motor with a microprocessor-controlled electrical stress-torque regulating unit (42), as well as a differential transmission (40).

6. Stress test rig according to one of Claims 1 to 5, **characterised in that** an electronic actuator control/regulating unit (36) with a signal input for a setpoint stress-torque value (44) and at least one signal output for a setpoint position value (48) of an actuator (22), or of the clamping plate (23) is provided, for stress-torque-dependent driving of the actuators (22).

7. Stress test rig according to Claim 6, **characterised in that** at least one torque sensor (34) is arranged in the stress circuit, and the electronic actuator control/regulating unit (36) has at least one signal input for an actual stress-torque value (46) measured by the torque sensor (34).

8. Stress test rig according to one of Claims 1 to 7, **characterised in that** at least one sensor is provided for the actual position value (50) of an actuator (22) or of the clamping plate (23).

9. Method for operating a stress test rig according to one of Claims 1 to 8, **characterised in that** the actuators (22) are driven as a function of the stress torque in the stress circuit, so as to compensate for displacements at the connecting couplings (12) of the test transmission which occur owing to the stress torque load.

10. Method according to Claim 9, **characterised in that** the actuators (22) are driven as a function of the setpoint stress-torque value (44).

11. Method according to Claim 10 for a stress test rig according to Claim 7 or 8, **characterised in that** the values of the actual (46) and setpoint (44) stress-torque values are compared in the electronic actuator control/regulating unit (36) in order to detect malfunction.

12. Method according to one of Claims 9 to 11 for a stress test rig according to Claim 8, **characterised in that** the values of the actual (50) and setpoint (48) position values are compared in the electronic actuator control/regulating unit (36) in order to detect malfunction.

13. Method according to Claim 11, **characterised in that**, in the event of a sudden decrease in the actual stress-torque value owing to malfunction, the actuators are immediately moved in accelerated emergency operation to a neutral starting position.

## Revendications

1. Banc d'essai de torsion pour transmission d'hélicoptère comprenant une première transmission de banc d'essai (16) qui est entraînée par un moteur (38) et forme un circuit de torsion passant par des arbres (4, 14, 54), des embrayages de liaison (12, 58), un mécanisme de torsion (40, 42), une deuxième transmission de banc d'essai (52) et une transmission d'essai (2) qui présente un arbre de rotor côté sortie (4), **caractérisé en ce que**, pour recevoir la transmission d'essai (2), il est prévu une plaque de fixation (23) qu'on peut faire tourner autour de l'axe de l'arbre du rotor de la transmission d'essai (2) au moyen d'au moins un actionneur (22) pour compenser les déplacements qui se produisent sous charge sur les embrayages de liaison (12) de la transmission d'essai.

2. Banc d'essai de torsion selon la revendication 1, **caractérisé en ce que** la plaque de fixation tournante (23) et les actionneurs (22) sont disposés sur un chariot de montage (20) qui reçoit la transmission d'essai (2) et tous les dispositifs d'adaptation nécessaires.

3. Banc d'essai de torsion selon la revendication 2, **caractérisé en ce qu'**il est prévu deux actionneurs (22) opposés symétriquement, qui sont disposés chacun entre un point de raccord (24) de la plaque de fixation (23) et un point de raccord (26) du chariot de montage (20), tangentiellement à la direction de rotation de la plaque de fixation (23).

4. Banc d'essai de torsion selon l'une des revendications 1 à 3, **caractérisé en ce que** la plaque de fixation (23) est montée mobile en translation axiale selon son axe de rotation par un palier (56).

5. Banc d'essai de torsion selon l'une des revendications 1 à 4, **caractérisé en ce que** le mécanisme de torsion comprend un moteur de torsion comportant une unité électrique de régulation du couple de torsion (42) commandée par microprocesseur, ainsi qu'une transmission de superposition (40).

6. Banc d'essai de torsion selon l'une des revendications 1 à 5, **caractérisé en ce qu'**une unité électronique de commande/régulation des actionneurs (36) comportant une entrée de signal pour une valeur de consigne (44) du couple de torsion et au moins une sortie de signal pour une valeur de consigne (48) de position d'un actionneur (22), ou de la plaque de fixation (23) est agencée pour commander des actionneurs (22) en fonction du couple de torsion.

7. Banc d'essai de torsion selon la revendication 6, **caractérisé en ce qu'**au moins un capteur de couple (34) est intercalé dans le circuit de torsion et **en ce que** l'unité électronique de commande/régulation des actionneurs (36) comporte au moins une entrée de signal pour une valeur réelle (46) du couple de torsion du capteur de couple (34).

8. Banc d'essai de torsion selon l'une des revendications 1 à 7, **caractérisé en ce qu'**il est prévu au moins un capteur pour la valeur réelle (50) de position d'un actionneur (22) ou d'une plaque de fixation (23).

9. Procédé pour la mise en oeuvre du banc d'essai de torsion selon l'une des revendications 1 à 8, **caractérisé en ce que** les actionneurs (22) sont commandés en fonction du couple de torsion développé dans le circuit de torsion, de telle manière que les déplacements sur les embrayages de liaison (12) de la transmission d'essai qui se produisent sous l'effet du couple de torsion soient compensés.

10. Procédé selon la revendication 9, **caractérisé en ce que** les actionneurs (22) sont commandés en fonction de la valeur de consigne (44) du couple de torsion.

11. Procédé selon la revendication 10 pour un banc d'essai de torsion selon la revendication 7 ou 8, **caractérisé en ce que** les valeurs de la valeur réelle (46) et de la valeur de consigne (44) du couple de torsion sont comparées dans l'unité électronique de commande/régulation (36) des actionneurs pour détecter un fonctionnement défectueux.

12. Procédé selon l'une des revendications 9 à 11 pour un banc d'essai de torsion selon la revendication 8, **caractérisé en ce que** les valeurs de la valeur réelle (50) et de la valeur de consigne (48) de la position sont comparées dans l'unité électronique de commande/régulation (36) des actionneurs pour détecter un fonctionnement défectueux.

13. Procédé selon la revendication 11, **caractérisé en ce que**, en réponse à une chute brutale de la valeur réelle du couple de torsion résultant d'un fonctionnement défectueux, les actionneurs sont aussitôt placés dans une position de départ neutre par une manoeuvre de secours accélérée.
